# FASCICULE DE BREVET EUROPEEN

(11) **EP 1 879 419 B1**
(45) Date de publication et mention de la délivrance du brevet: **30.12.2015**
(21) Numéro de dépôt: 07013657.7
(22) Date de dépôt: 12.07.2007
(51) Int. Cl.: H04W 56/00

(54) **Détection de collision asynchrone dans un système de téléphonie mobile directe**
Erfassung einer asynchronen Kollision in einem System für direkten Mobilfunk
Asynchronous collision detection in a direct mobile telephony system

(30) Priorité: 12.07.2006 FR 0606390
(43) Date de publication de la demande: 16.01.2008
(73) Titulaire: SAGEMCOM ENERGY & TELECOM SAS, 92500 Rueil-Malmaison (FR)
(72) Inventeur: Dorion-Cousinat, Marc, 69009 Lyon (FR); De Graeve, Frédéric, 75017 Paris (FR); Dumont, Jérémie, 91190 Gif Sur Yvette (FR)
(74) Mandataire: Guéné, Patrick

(56) Documents cités:
- EP-A- 1 608 087
- WO-A-02/13419
- MOULY M ET AL: "The GSM System for Mobile Communications, PASSAGE", GSM SYSTEM FOR MOBILE COMMUNICATIONS, 1992, pages 194-227, XP002269462,
- MOULY M ET AL: "GSM SYSTEM FOR MOBILE COMMUNICATIONS , PASSAGE", GSM SYSTEM FOR MOBILE COMMUNICATIONS, LASSAY-LES-CHATEAUX, EUROPE MEDIA, FR, 1993, pages 327-341, XP002229846,

## Description

La présente invention concerne un système de téléphonie mobile directe du type où les *slots* d'une trame qui définit une utilisation temporelle d'une fréquence porteuse d'appels sont assemblés dans des multitrames réservées chacune pour l'émission des données utiles de l'un desdits appels. La présente invention concerne également une station mobile adaptée pour être destinée à être utilisée dans un tel système. Enfin, la présente invention concerne un procédé de gestion de collision asynchrone qui est destiné à être exécuté par chaque station mobile dudit système de téléphonie mobile directe.

Un système de téléphonie mobile directe est un système de téléphonie dans lequel chaque station mobile, dite station émettrice, est susceptible d'émettre un appel sur une fréquence et sur une zone géographique délimitée par la puissance dont elle dispose pour émettre les signaux relatifs à cet appel sur cette fréquence. Chaque station mobile qui n'émet pas un appel et qui se situe dans une zone géographique couverte par une station émettrice d'un appel, c'est-à-dire à portée de cette station émettrice, est alors susceptible d'écouter cet appel. Une telle station mobile est dite réceptrice.

Le document EP-A-1 608 087 décrit un système de téléphonie mobile directe plus particulièrement du type où des slots d'une trame qui permet une utilisation temporelle d'une fréquence porteuse d'appels sont assemblés dans une multi trame.

Comme tout système de téléphonie, un système de téléphonie mobile directe requiert l'obtention de fréquences auprès d'organismes officiels qui garantissent que ces fréquences ne seront attribuées que pour ce type de système.

Le nombre de fréquences attribuées à un système de téléphonie mobile directe est généralement largement inférieur au nombre souhaité d'usagers susceptibles d'émettre des appels sur une même zone géographique. Afin d'augmenter la capacité d'émission simultanée d'appels sur une zone géographique donnée, certains systèmes de téléphonie mobile directe utilisent le principe de l'accès multiple par division de temps (Time Division Multiple Access).

Dans un système de téléphonie mobile à accès multiple par division de temps (TDMA), les données échangées sont transmises sous forme de données numériques dans des intervalles de temps (time slots). On utilisera le terme *slot* pour désigner un tel intervalle de temps car c'est le terme qui est utilisé par l'homme du métier. On l'écrira en italique pour toutefois marquer son origine anglo-saxonne.

Le livre de Mouly et All, intitulé "The GSM System for Mobile Communications" décrit un système de téléphonie mobile du type GSM où des *slots* d'une trame qui permet une utilisation temporelle d'une fréquence porteuse d'appels sont assemblés dans des multi trames, chacune réservée pour l'émission des données utiles de l'un desdits appels.

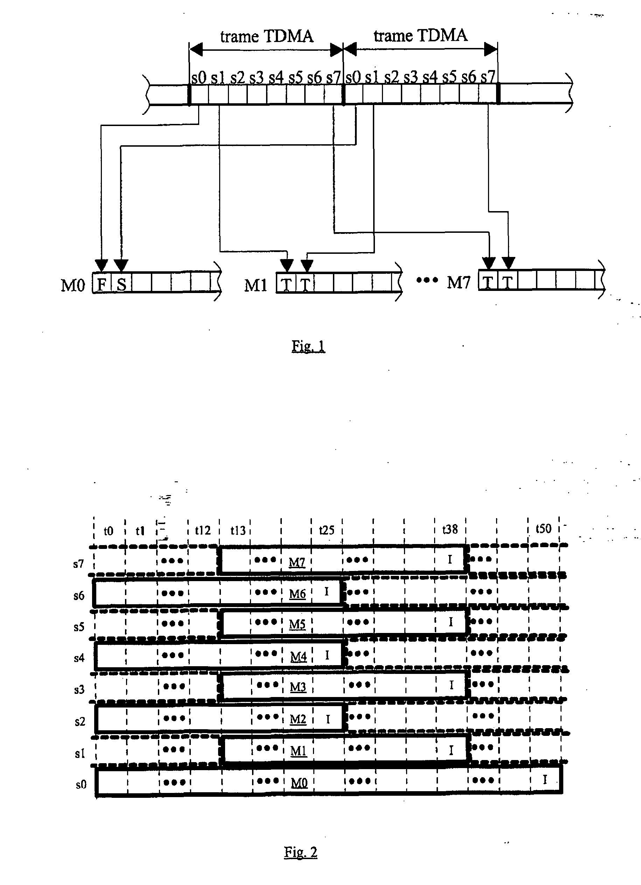

L'accès multiple par division de temps (TDMA) permet à différents usagers de partager, au cours du temps, l'utilisation de chaque fréquence attribuée, partage qui est défini par une trame dite trame TDMA qui fixe la disposition temporelle des *slots.* La trame TDMA est, dans le cas particulier d'un système GSM (Global System for Communications), un ensemble constitué de huit *slots* successifs notés s0 à s7 tel que représenté à la Fig. 1.

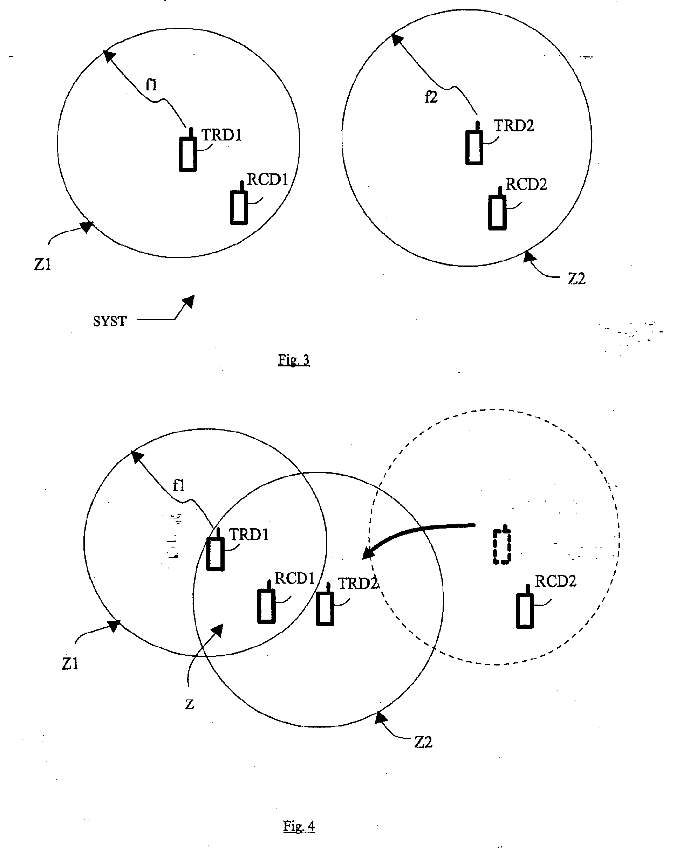

Une multitrame Mj à NT *slots* de trames est une structure qui est souvent utilisée pour permettre de repérer un *slot* sur une échelle supérieure à la durée de la trame TDMA. Cette structure est définie par assemblage de *slots* sₖ d'un même rang donné k de NT trames TDMA successives. Comme illustré à la Fig. 1, les *slots* s₀ de trames TDMA successives sont assemblés pour former la multitrame M₀, les *slots* s₁ de trames TDMA successives sont assemblés pour former la multitrame M₁, etc. On peut noter que seules deux trames TDMA successives sont représentées à la Fig. 3 alors qu'une multitrame M₀ est le plus souvent constituée de N *slots* s₀ (avec N > 2) et que les multitrames Mⱼ (j≠0) sont généralement constituées de M *slots* sⱼ (avec M > 2). Par exemple, dans le cas d'un système de téléphonie mobile directe basé sur les normes GSM, N = 51 et M = 26.

L'accès multiple par division de temps impose que les stations mobiles qui utilisent une même fréquence attribuée et qui se situent à portée les unes des autres soient synchronisées entre elles en temps afin qu'un *slot* sⱼ (j≠0) dédié à l'émission des données utiles d'un appel (marquées T à la Fig. 1) par une de ces stations ne chevauche pas le *slot* suivant qui serait dédié à l'émission des données utiles d'un autre appel par une autre de ces stations mobiles.

La multitrame M₀, appelée par la suite multitrame système, de chaque fréquence attribuée est souvent réservée pour l'émission des données dites données système qui sont relatives au fonctionnement du système de téléphonie mobile directe. Les données système sont notamment des données de calage en fréquence (marquées F à la Fig. 1), qui permettent à chaque station mobile réceptrice d'un appel de se caler sur la fréquence de la station émettrice de cet appel, et dcs données de synchronisation (marquées S à la Fig. 1) qui permettent aux stations émettrices d'appel qui se situent à portée les unes des autres de se synchroniser entre elles en temps. On peut noter que les autres multitrames Mⱼ (j≠0), appelées multitrames utilisateur, de chaque fréquence sont formées par l'assemblage des *slots* de trame TDMA qui sont dédiés à l'émission des données utiles d'autres appels sur cette fréquence. Chaque multitrame utilisateur est dite réservée dans la suite de la description pour signifier qu'elle est formée par l'assemblage de *slots* de trames TDMA dédiés à un même appel.

La Fig. 2 représente un exemple d'organisation des multitrames Mj formées par assemblage de *slots* dédiés de trames TDMA dans le cas d'un système de téléphonie cellulaire basé sur les normes GSM.

La multitrame M₀ est formée par assemblage des *slots* s₀ de 51 trames TDMA successives notées t0 à t50 et chaque multitrame Mⱼ est formée par assemblage des *slots* sⱼ de 26 trames TDMA successives, selon les normes GSM. Verticalement sont représentées les *slots* s₀ à s₇ des 51 trames TDMA successives tandis qu'horizontalement sont représentées les huit multitrames Mj formées par assemblage des *slots* sⱼ (j=0 à 7) des trames TDMA successives. Les multitrames constituées uniquement de *slots* des 51 trames TDMA successives t0 à t50 sont représentées en trait gras tandis que les autres multitrames sont représentées en trait discontinu.

La multitrame système M₀ est, répétons-le, réservée à l'émission des données système et les autres multitrames Mj (j≠0) sont réservées à l'émission des données utiles de chaque appel Aj (j=1 à 7) sur la même fréquence porteuse.

On peut noter également qu'au cours de la multitrame système M₀, respectivement chaque multitrame utilisateur Mj (j=1 à 7), des données système, respectivement utiles d'un appel Aj, sont émises pendant 50 *slots,* respectivement 25 *slots* de trames TDMA successives, laissant ainsi libre le dernier *slot* de la multitrame système M0, respectivement de chaque multitrame utilisateur Mj (j=1 à 7). Ces *slots* laissés libres sont notés I à la Fig. 2.

De plus, toujours selon les normes GSM, les multitrames utilisateurs paires, en l'occurrence les multitrames M2, M4 et M6, sont alignées, c'est-à-dire que les quatre *slots* libres I de ces multitrames sont alignés temporellement une fois par cycle de 51 trames TDMA lors de la réception de la trame t25. De même les multitrames utilisateurs impaires, en l'occurrence les multitrames M1, M3, M5 et M7 sont alignées, c'est-à-dire que les quatre *slots* libres I de ces multitrames sont alignés temporellement une fois par cycle de 51 trames TDMA lors de la réception de la trame t38. Pour la multitrame système M0, le *slot* laissé libre 1 est situé dans la trame t50.

On peut noter que les *slots* laissés libres 1 des différentes multitrames utilisateurs se situent dans deux trames TDMA différentes (t25 et t38 selon l'exemple), ce qui implique qu'ils ne se produisent jamais au même moment temporel.

La Fig. 3 est un schéma d'un exemple de système de téléphonie mobile directe SYST. Le système de téléphonie SYST comporte, selon cet exemple, une première station mobile TRD1 émettrice sur une zone géographique Z1 d'un appel porté par une des fréquences attribuées f1. Le système SYST comporte également une station mobile RCD1 qui, selon cet exemple, est réceptrice de l'appel émis par la station émettrice TRD1 du fait qu'elle se trouve à sa portée, c'est-à-dire qu'elle est située dans la zone géographique Z1. Les stations TRD1 et RCD1 sont alors synchronisées entre elles en temps et calées sur la fréquence f1. Enfin, selon cet exemple, le système SYST comporte une seconde station mobile TRD2 émettrice sur une zone géographique Z2 d'un autre appel porté par une fréquence attribuée f2 et une station RCD2 réceptrice de l'appel émis par la station émettrice TRD2. Les stations TRD2 et RCD2 sont alors synchronisées entre elles en temps et calées sur la fréquence f2.

Supposons, tel que cela est représenté à la Fig. 3, que les stations TRD1 et TRD2 sont suffisamment éloignées, c'est-à-dire que les zones géographiques Z1 et Z2 sont distinctes, pour que ces deux stations ne soient pas synchronisées entre elles. On obtient alors, d'un côté le couple de stations TRD1/RCD1 qui sont synchronisées entre elles et d'un autre côté le couple de stations TRD2/RCD2 qui sont synchronisées entre elles. Selon cet exemple, les stations RCD 1 et RCD2 reçoivent donc correctement les appels émis par les stations TRD1 et TRD2. Par contre, comme cela est illustré à la Fig. 4, dès que les stations émettrices TRD1 et TRD2 se rapprochent et surtout lorsqu'elles se trouvent à portée l'une de l'autre, une zone Z d'interférence co-canal se produit. Dans le cas où des stations réceptrices se trouvent dans la zone Z, définie par l'intersection des zones géographiques Z1 et Z2, ces stations réceptrices subissent les interférences co-canal qui se traduisent par un brouillage de la réception des appels qu'elles sont en train d'écouter. Ainsi, selon l'exemple de la Fig. 4, la station RCD1 ne peut plus recevoir correctement l'appel émis par la station émettrice TRD1. Il y a alors apparition d'une collision d'accès aux ressources radio, que nous qualifierons d'asynchrone pour marquer qu'elle se produit du fait que les stations émettrices TRD1 et TRD2 à portée l'une de l'autre ne sont pas synchronisées entre elles en temps.

Le problème résolu par la présente invention est donc de prévoir un système de téléphonie mobile directe tel que décrit précédemment qui permet de détecter et de corriger les collisions asynchrones d'accès aux ressources radio nécessaires à l'émission d'appels par des stations mobiles dudit système de téléphonie mobile directe. L'invention concerne un système de téléphonie mobile directe tel que décrit ci-dessus, qui est caractérisé en ce que les slots laissés libres dans lesdites multitrames sont alignés temporellement. L'invention est décrite dans les revendications 1-3 pour un système, les revendications 4-10 pour une station mobile, les revendications 11-14 pour un procédé et la revendication 15 pour un programme d'ordinateur.

Un exemple concerne un système de téléphonie mobile directe tel que décrit ci-dessus, dans lequel l'assemblage des *slots* de trame dédiés à l'émission des données utiles d'appel pour former les multitrames utilisateur dudit système est tel que toutes les multitrames utilisateur paires et impaires sont alignées temporellement.

Ainsi, les *slots* laissés libres des multitrames utilisateurs sont tous alignés temporellement. De plus, toutes les NxM trames TDMA, cet alignement coïncide avec l'alignement du *slot* laissé libre de la multitrame système M0. Les *slots* laissés libres des multitrames utilisateurs et de la multitrame système sont alors tous émis dans une même trame appelée trame de silence. Dès réception de cette trame de silence, la détection d'une collision asynchrone d'accès aux ressources radio est exécutée selon la présente invention.

Pour cela, chaque station mobile du système de téléphonie mobile directe est adaptée à déterminer le temps de début et la durée d'une trame de silence afin qu'elle puisse basculer dans un mode réception de données pour la durée de cette trame de silence.

Chaque station mobile du système de téléphonie mobile directe est également adaptée à détecter si des données sont émises pendant la durée de cette trame de silence.

Ainsi, dans le cas où une station mobile parmi une pluralité de stations mobiles synchronisées entre elles en temps détecte que des données ont été émises, elle en déduit que la station émettrice de ces données n'est pas synchronisée avec ladite pluralité de stations mobiles.

Chaque station mobile du système de téléphonie mobile directe est, de plus, adaptée à émettre, sur une fréquence attribuée, des données utiles d'un appel qu'elle est susceptible d'émettre au cours d'un *slot* de trame TDMA qui lui serait dédié, de manière à ce que la multitrame utilisateur formée alors par l'assemblage desdits *slots* dédiés de trames successives est alignée avec les autres multitrames utilisateur susceptibles d'être réservées pour d'autres appels sur ladite fréquence attribuée.

De plus, chaque station mobile du système de téléphonie directe est adaptée à obtenir les données utiles relatives à un appel sur une fréquence attribuée qu'elle est susceptible d'écouter à partir d'une multitrame utilisateur dudit système qui est alignée avec les autres multitrames utilisateur susceptibles d'être réservées pour d'autres appels sur ladite fréquence attribuée.

Chaque station mobile du système de téléphonie mobile directe est également adaptée à corriger une collision asynchrone d'accès aux ressources radio.

Selon un mode de réalisation d'une telle station mobile concernant la correction de collision asynchrone d'accès aux ressources radio, la station mobile à l'origine de la détection-de la collision est adaptée à recevoir les données de synchronisation émises par une autre station mobile qui se situe à sa portée et qui n'est pas synchronisée avec elle.

La station mobile parfait alors son calage en temps avec ladite autre station mobile en fonction des données de synchronisation reçues. Ces nouvelles données de synchronisation sont alors diffusées aux stations mobiles qui sont à sa portée afin de respecter la contrainte de synchronisation des stations mobiles à portée les unes des autres inhérente à un système de téléphonie mobile direct à accès multiples par division de temps.

Selon un autre mode de réalisation d'une telle station mobile concernant la correction de collision asynchrone d'accès aux ressources radio, la station mobile à l'origine de la détection de la collision émet ses données de synchronisation afin que ladite autre station mobile obtienne ces données de synchronisation et se synchronise avec la station mobile à l'origine de la détection de la collision.

La présente invention concerne également un procédé de gestion de collisions d'accès aux ressources tel que décrit dans les revendications 11-14.

Un exemple concerne également un procédé de gestion de collision asynchrone d'accès aux ressources radio qui peuvent se produire entre deux stations mobiles d'un système de téléphonie mobile du type où les *slots* d'une trame qui définit une utilisation temporelle d'une fréquence porteuse d'appels sont assemblés dans des multitrames réservées chacune pour l'émission des données utiles de l'un desdits appels émis par une station mobile d'une pluralité de stations mobiles synchronisées entre elles en temps.

Le procédé est destiné à être exécuté par chaque station mobile d'un système de téléphonie mobile directe caractérisé selon la présente invention, c'est-à-dire dans lequel une trame de silence est émise périodiquement.

Le procédé débute par une étape de détermination du temps de début et la durée d'une trame de silence. Dès lors qu'un temps de début de trame de silence arrive à échéance, l'étape de détermination du temps de début et de la durée d'une trame de silence est suivie d'une étape de détection de réception de données qui débute audit temps de début et pour une durée égale à ladite durée de ladite trame de silence. Dans le cas où aucune donnée n'a été reçue au cours de ladite trame de silence, l'étape de détection de réception de données est suivie de l'étape de détermination du temps de début et de la durée d'une trame de silence au cours de laquelle le procédé est mis en attente jusque l'expiration d'un nouveau temps de début de trame de silence.

Dans le cas où des données sont reçues au cours de la trame de silence, c'est-à dire lorsqu'une collision asynchrone d'accès aux ressources radio est détectée entre deux stations mobiles non synchronisées entre elles en temps et à portée l'une de l'autre, l'étape de détection de réception de données est suivie d'une étape de correction de collision d'accès aux ressources radio au cours de laquelle sont reçues, d'une part, par une première des deux dites stations mobiles les données de synchronisation émises par la deuxième des deux dites stations mobiles, ct au cours de laquelle, d'autre part, ladite première station mobile réceptrice desdites données de synchronisation parfait sa synchronisation en temps vis-à-vis de ladite deuxième station émettrice desdites données de synchronisation.

Selon un mode de réalisation du procédé, la station mobile qui a détecté ladite collision est ladite première station mobile.

Selon un autre mode de réalisation, la station mobile qui a détecté ladite collision est ladite deuxième station mobile.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma d'un exemple de trame TDMA,
la Fig. 2 est un schéma d'un exemple de formation de multitrames par assemblage des *slots* de trame TDMA selon les normes GSM,
la Fig. 3 représente un schéma d'un exemple de système de téléphonie mobile directe,
la Fig. 4 est un schéma illustrant un cas dans lequel une collision asynchrone d'accès aux ressources radio se produit,
la Fig. 5 représente un exemple de mécanisme de diffusion des données de synchronisation entre stations mobiles à portée les unes des autres,
la Fig. 6 représente un exemple d'assemblage des *slots* de trame TDMA successives afin de former les multitrames d'un système de téléphonie mobile directe selon la présente invention,
la Fig. 7 est un schéma d'une station mobile selon la présente invention, et
la Fig. 8 est un diagramme des étapes du procédé de gestion de collision d'accès selon la présenté invention

Dans la suite de la description, la présente invention est décrite dans le cas particulier d'un système de téléphonie mobile directe basé sur les normes GSM. Cependant, la présente invention n'est pas limitée à ce type de système de téléphonie mobile directe.

Dans un système de téléphonie mobile directe à accès multiple par division de temps, qui a été décrit dans la partie introductive, il est nécessaire de prévoir un mécanisme de diffusion des données de synchronisation S qui permette à des stations mobiles à portée les unes des autres de se synchroniser entre elles en temps, que ces stations soient émettrices ou réceptrices d'un appel.

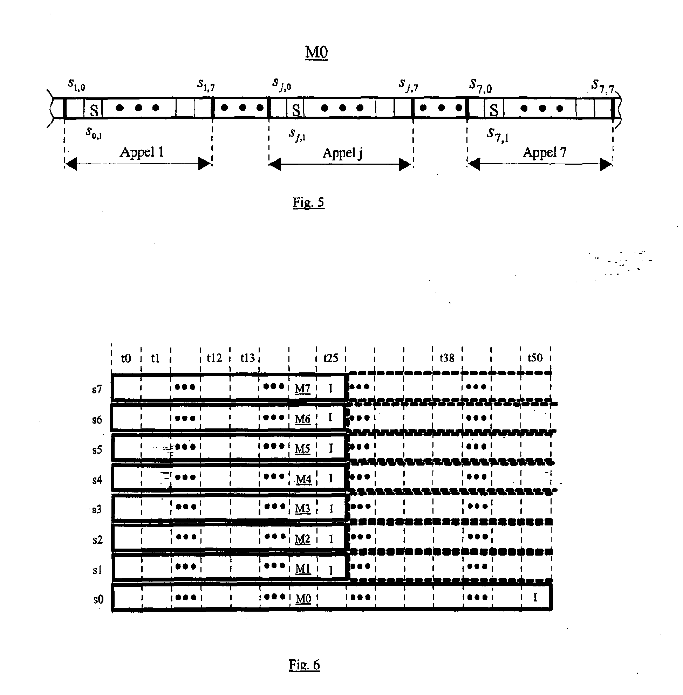

La Fig. 5 représente un exemple d'un tel mécanisme basé sur le concept de voie balise issu des normes GSM.

Selon cet exemple, la multitrame M₀ de chaque fréquence attribuée au système de téléphonie mobile directe est dédiée, en outre, à l'émission des données de synchronisation S. La multitrame M₀ est ici une multitrame à 51 *slots* de trames. Selon cet exemple, sept appels Aⱼ (j=1 à 7) pcuvcnt être simultanément portés par chaque fréquence attribuée. Les ressources radio nécessaires à l'émission de chacun de ces sept appels Aⱼ sont, en outre, constituées de la même fréquence porteuse, d'un *slot* sⱼ de la trame TDMA qui est dédié à l'émission des données utiles relatives à un appel Aj, et sept *slots* s_{j,k} (k=1 à 7) de la multitrame système M₀ qui sont dédiés à l'émission des données système relatives à l'appel Aj. Chaque multitrame utilisateur Mⱼ est formée ici par l'assemblage des *slots* sⱼ de 26 trames TDMA successives et la multitrame système M0 est formée par l'assemblage des slots s0 de 51 trames TDMA.

Toujours selon cet exemple, les données de synchronisation S sont envoyées au cours du *slot* s_{j,l} par la station émettrice TRDj de l'appel Aⱼ et les autres *slots* s_{j,k}(k≠1). sont dédiés à l'émission d'autres données système relatives au fonctionnement du système de téléphonie mobile directe.

Une telle ion de la multitrame système M₀ permet donc que les mêmes données de synchronisation S soit connues, en particulier, des stations mobiles émettrices d'appel sur une même fréquence attribuée lorsque ces stations sont à portée l'une de l'autre. Ainsi, les station émettrices d'appel sur la même fréquence émettent toutes les mêmes données de synchronisation S au même instant sur le *slot* de synchronisation s_{j,1} relatif à l'appel Aⱼ que chacune de ces stations émet.

La Fig. 6 représente un exemple d'assemblage des *slots* de trames TDMA successives permettant la formation des multitrames d'un système de téléphonie mobile directe selon la présente invention. Cet exemple correspond à un système de téléphonie mobile directe basé sur les normes GSM tel qu'introduit à la Fig. 4. Les éléments de la Fig. 5 qui portent les mêmes références que les éléments de la Fig. 4 désignent les mêmes éléments.

La caractéristique essentielle de la présente invention est le fait d'assembler les *slots* de trames TDMA successives de manière à ce que les multitrames utilisateur, qu'elles soient paires ou impaires, soient alignées temporellement. De ce fait, les *slots* laissés libres et notés I des multitrames utilisateur sont tous alignés temporellement une fois par cycle de 51 trames TDMA successives. On rappelle ici que les multitrames utilisateur sont réservées pour les appels sur une même fréquence et sont émises par des stations qui sont synchronisées en temps entre elles.

De plus, un tel assemblage des *slots* de trames TDMA permet qu'une fois toutes les MxN (ici 26x51) trames TDMA, le *slot* laissé libre I de la multitrame système M₀ soit également aligné avec les *slots* laissés libres I des multitrames utilisateur

En d'autres termes, une trame dite de silence est émise, c'est-à-dire une trame constituée uniquement de *slots* au cours desquels aucune donnée n'est émise par les stations synchronisées en temps entre elles. On peut noter que selon l'exemple de la Fig. 5, un seul alignement des *slots* laissés libres 1 de toutes les multitrames se produit par cycle de MxN trames TDMA car chacune des multitrames ne comporte qu'un seul *slot* laissé libre I. Une seule trame de silence est donc cnvoyée par cycle de MxN trames TDMA. La périodicité de cet alignement (de l'émission de trame de silence) peut cependant être réduite si plusieurs *slots* des multitrames utilisateur et/ou de la multitrame système sont laissés libres.

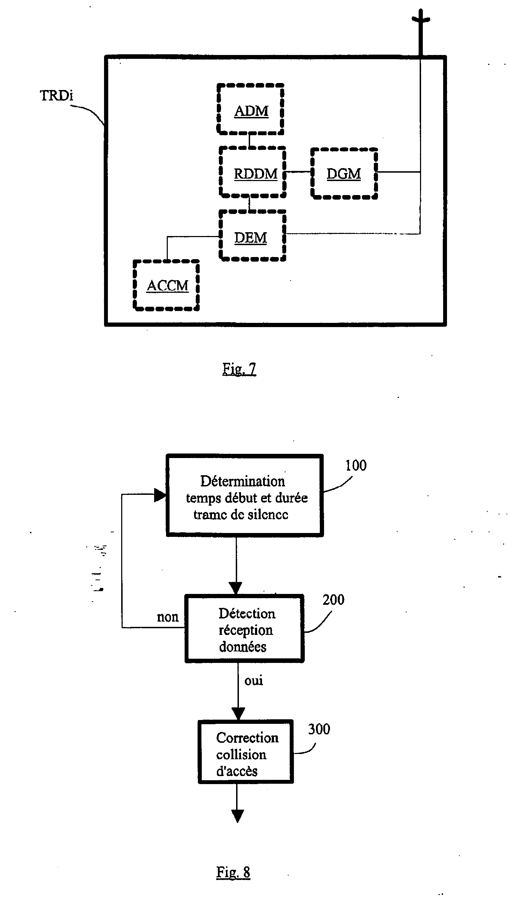

La Fig. 7 représente un schéma d'une station mobile TRDi susceptible d'être utilisée dans un tel système de téléphonie mobile directe selon la présente invention.

Pour cela, la station mobile TRDi, qui peut être, de manière non limitative, un téléphone ou un ordinateur portable équipé de moyens de communication radio, comporte des moyens ADM pour déterminer le temps de début et la durée d'une trame de silence afin qu'elle puisse basculer dans un mode réception de données pour la durée de cette trame de silence.

La station mobile TRDi comporte également des moyens RDDM pour détecter si des données sont émises pendant la durée de cette trame de silence.

Ainsi, dans le cas où la station mobile TRDi, parmi une pluralité de stations mobiles synchronisées entre elles en temps, détecte que des données ont été émises, la station mobile TRDi en déduit que la station émettrice de ces données n'est pas synchronisée avec ladite pluralité de stations mobiles.

De plus, la station mobile TRDi comporte des moyens DEM pour émettre, sur une fréquence attribuée, des données utiles d'un appel qu'elle est susceptible d'émettre au cours d'un *slot* de trame TDMA qui lui serait alors dédié. Ces moyens DEM sont particuliers en ce sens que la multitrame utilisateur formée alors par l'assemblage desdits slots dédiés de trames TDMA successives est alignée avec les autres multitrames utilisateur susceptibles d'être réservées pour d'autres appels sur la même fréquence.

De manière duale, la station mobile TRDi comporte des moyens DGM pour obtenir les données utiles relatives à un appel sur une fréquence qu'elle est susceptible d'écouter. Ces moyens DGM sont particuliers en ce sens que lesdites données sont obtenues à partir d'une multitrame utilisateur dudit système qui est alignée avec les autres multitrames utilisateur susceptibles d'être réservées pour d'autres appels sur la même fréquence.

La station mobile TRDi comporte enfin des moyens ACCM pour corriger une collision asynchrone d'accès aux ressources radio.

Selon un mode de réalisation de la station mobile TRDi concernant la correction de collision asynchrone d'accès aux ressources radio, la station mobile TRDi est adaptée à obtenir des données de synchronisation émises par une autre station mobile TRDj (j≠i) qui se situe à sa portée et qui n'est pas synchronisée avec elle.

Selon une variante de ce mode de réalisation, la station mobile TRDi émet ses données de synchronisation afin que la station mobile TRDj obtienne ces données de synchronisation et se synchronise avec la station mobile TRDi.

La station mobile TRDi (ou la station TRDj) parfait alors son calage en temps avec ladite autre station mobile en fonction des données de synchronisation reçues. Ces nouvelles données de synchronisation sont alors diffusées aux stations mobiles qui sont à sa portée afin de respecter la contrainte de synchronisation des stations mobiles à portée les unes des autres inhérente à un système de téléphonie mobile directe à accès multiples par division de temps.

La Fig. 8 représente un diagramme des étapes d'un procédé de gestion de collision asynchrone aux ressources radio selon la présente invention.

Le procédé est destiné à être exécuté par chaque station mobile TRDi du système de téléphonie mobile directe selon la présente invention, c'est-à-dire un système dans lequel l'assemblage des *slots* de trame utilisés pour former les multitrames est tel que toutes les multitrames utilisateur paires et impaires sont alignées temporellement.

Le procédé débute par une étape 100 de détermination du temps de début et de la durée d'au moins une trame de silence. Dès lors qu'un temps de début de trame de silence arrive à échéance, l'étape 100 est suivie d'une étape 200 de détection de réception de données qui débute audit temps de début et pour une durée égale à ladite durée de ladite trame de silence. Dans le cas où aucune donnée n'a été reçue au cours de ladite trame de silence, l'étape 200 est suivie de l'étape 100 au cours de laquelle le procédé est mis en attente jusqu'à l'expiration d'un nouveau temps de début de trame de silence.

Dans le cas où des données sont reçues au cours de la trame de silence, c'est-à-dire lorsqu'une collision asynchrone d'accès est détectée, l'étape 200 est suivie d'une étape 300 de correction de collision asynchrone d'accès aux ressources radio au cours de laquelle il est obtenu les données de synchronisation émises par une des stations mobiles non synchronisées en temps avec une autre station mobile à sa portée. De plus, au cours de l'étape 300 de correction de collision asynchrone d'accès, la station mobile réceptrice desdites données de synchronisation parfait sa synchronisation en temps vis-à-vis de la station émettrice desdites données de synchronisation.

Selon un mode de réalisation du procédé, lorsqu'une station mobile a détecté une collision asynchrone d'accès avec une autre station mobile, la station mobile obtient les données de synchronisation de ladite autre station afin de se synchroniser avec cette autre station mobile.

Selon une variante de ce mode de réalisation, la station mobile qui a détecté une telle collision émet ses données de synchronisation afin que cette autre station mobile se synchronise avec elle.

## Revendications

1. Système de téléphonie mobile directe du type où des *slots* (s_{j,i}) d'une trame qui définit une utilisation temporelle d'une fréquence porteuse d'appels sont assemblés dans des multitrames (Mⱼ) réservées chacune pour l'émission des données utiles de l'un desdits appels, **caractérisé en ce que** les slots laissés libres dans lesdites multitrames sont alignés temporellement.

2. Système de téléphonie mobile directe selon la revendication 1, **caractérisé en ce que** chaque station mobile dudit système est adaptée à détecter une collision d'accès entre les ressources radio qu'elle utilise pour émettre un appel et les ressources radio utilisées par une autre station mobile émettrice d'un autre appel, les deux dites stations mobiles n'étant pas synchronisées entre elles en temps.

3. Système de téléphonie mobile directe selon la revendication 2, **caractérisé en ce que** chaque station mobile est adaptée à corriger ladite collision d'accès.

4. Station mobile d'un système de téléphonie mobile directe du type où les *slots* (s_{j,i}) d'une trame qui définit une utilisation temporelle d'une fréquence porteuse d'appels sont assemblés dans des multitrames (Mⱼ) réservées chacune pour l'émission des données utiles de l'un desdits appels émis par une station mobile d'une pluralité de stations mobiles synchronisées entre elles en temps, **caractérisée en ce que**, une trame de silence étant constituée par l'alignement temporel des *slots* laissés libres desdites multitrames et ladite trame de silence étant émise périodiquement sur ladite fréquence porteuse, ladite station mobile comporte des moyens (ADM) pour déterminer le temps de début et la durée de ladite trame de silence afin qu'elle puisse basculer dans un mode réception de données pour la durée de cette trame de silence.

5. Station mobile selon la revendication 4, **caractérisée en ce qu'**elle comporte également des moyens (RDDM) pour détecter si des données utiles sont émises pendant la durée de ladite trame de silence.

6. Station mobile selon l'une des revendications 4 à 5, **caractérisée en ce qu'**elle comporte des moyens (DEM) pour émettre, sur une fréquence attribuée, des données utiles d'un appel qu'elle est susceptible d'émettre au cours d'un *slot* de trame qui lui serait alors dédié, une desdites multitrames formées alors par l'assemblage desdits *slots* dédiés étant alignée avec lesdites autres multitrames susceptibles d'être réservées pour d'autres appels sur ladite fréquence attribuée.

7. Station mobile selon l'une des revendications 4 à 6, **caractérisée en ce qu'**elle comporte des moyens (DGM) pour obtenir les données utiles relatives à un appel sur une fréquence attribuée qu'elle est susceptible d'écouter, lesdites données étant obtenues à partir de l'une desdites multitrames qui est alignée avec lesdites autres multitrames susceptibles d'être réservées pour d'autres appels sur ladite fréquence attribuée.

8. Station mobile selon l'une des revendications 4 à 7, **caractérisée en ce qu'**elle comporte des moyens (ACCM) pour corriger une collision d'accès aux ressources radio détectée entre elle et une autre station à sa portée et qui n'est pas synchronisée avec elle.

9. Station mobile selon la revendication 8, les stations mobiles à portée les unes des autres dudit système étant synchronisées entre elles en temps par partage de données de synchronisation, **caractérisée en ce qu'**elle est adaptée à recevoir des données de synchronisation émises par ladite autre station mobile et à se synchroniser avec ladite autre station mobile.

10. Station mobile selon la revendication 8, les stations mobiles à portée les unes des autres dudit système étant synchronisées entre elles en temps par partage de données de synchronisation, **caractérisée en ce qu'**elle comporte des moyens pour émettre ses données de synchronisation afin que ladite autre station mobile obtienne ces données de synchronisation et se synchronise avec elle.

11. Procédé de gestion de collision d'accès aux ressources radio destiné à être exécuté par chaque station mobile d'un système de téléphonie mobile directe du type où les *slots* (s_{j,i}) d'une trame qui définit une utilisation temporelle d'une fréquence porteuse d'appels sont assemblés dans des multitrames (Mⱼ) réservées chacune pour l'émission des données utiles de l'un desdits appels émis par une station mobile d'une pluralité de stations mobiles synchronisées entre elles en temps, **caractérisé en ce que**, une trame de silence étant constituée par l'alignement temporel des *slots* laissés libres desdites multitrames et ladite trame de silence étant émise périodiquement sur ladite fréquence porteuse, et ledit procédé comporte en outre une étape (100) de détermination du temps de début et de la durée de ladite trame de silence, et une étape (200) de détection de réception de données émises par une autre station mobile qui débute audit temps de début et pour une durée égale à ladite durée de ladite trame de silence.

12. Procédé de gestion de collision d'accès aux ressources radio selon la revendication 11, les stations mobiles à portée les unes des autres dudit système étant synchronisées entre elles en temps par partage de données de synchronisation, **caractérisé en ce que**, dans le cas où une collision d'accès a été détectée entre deux stations mobiles, ladite étape (200) de détection de réception de données est suivie d'une étape (300) de correction de collision d'accès aux ressources radio au cours de laquelle sont, d'une part, reçues par une première des deux dites stations mobiles les données de synchronisation émises par la deuxième des deux dites stations mobiles, et au cours de laquelle, d'autre part, ladite première station mobile réceptrice desdites données de synchronisation parfait sa synchronisation en temps vis-à-vis de ladite deuxième station émettrice desdites données de synchronisation.

13. Procédé de gestion de collision d'accès aux ressources radio selon la revendication 12, **caractérisé en ce que** la station mobile qui a détecté ladite collision est ladite première station mobile.

14. Procédé de gestion de collision d'accès aux ressources radio selon la revendication 12, **caractérisé en ce que** la station mobile qui a détecté ladite collision est ladite deuxième station mobile.

15. Programme d'ordinateur stocké sur un support d'informations, **caractérisé en ce qu'**il comporte des instructions permettant de mettre en oeuvre le procédé selon l'une des revendications 11 à 14, lorsqu'il est chargé et exécuté par une station mobile d'un système de téléphonie mobile directe.

## Patentansprüche

1. System für direkten Mobilfunk von der Art, bei der *Slots* (s_{j,i}) eines Rahmens, welcher eine zeitliche Verwendung einer Trägerfrequenz für Anrufe definiert, in Mehrfachrahmen (Mⱼ) zusammengefasst sind, welche jeweils für das Senden der Nutzdaten eines der Anrufe reserviert sind, **dadurch gekennzeichnet, dass** die in den Mehrfachrahmen frei gelassenen Slots zeitlich abgeglichen werden.

2. System für direkten Mobilfunk nach Anspruch 1, **dadurch gekennzeichnet, dass** jede Mobilstation des Systems dazu ausgelegt ist, eine Zugriffskollision zwischen den Funkres-sourcen, welche sie zum Senden eines Anrufs verwendet, und den Funkressourcen zu detektieren, welche von einer weiteren, einen weiteren Anruf sendenden Mobilstation verwendet werden, wobei die beiden Mobilstationen zeitlich nicht miteinander synchronisiert sind.

3. System für direkten Mobilfunk nach Anspruch 2, **dadurch gekennzeichnet, dass** jede Mobilstation dazu ausgelegt ist, die Zugriffskollision zu beheben.

4. Mobilstation eines Systems für direkten Mobilfunk von der Art, bei der *Slots* (s_{j,i}) eines Rahmens, der eine zeitliche Verwendung einer Trägerfrequenz für Anrufe definiert, in Mehrfachrahmen (Mⱼ) zusammengefasst sind, die jeweils für das Senden der Nutzdaten eines der Anrufe reserviert sind, welche von einer Mobilstation aus einer Mehrzahl von zeitlich miteinander synchronisierten Mobilstationen gesendet werden, **dadurch gekennzeichnet, dass** bei einem Ruherahmen, der aus dem zeitlichen Abgleich der freigelassenen Slots der Mehrfachrahmen besteht, wobei der Ruherahmen periodisch auf der Trägerfrequenz gesendet wird, die Mobilstation Mittel (ADM) zum Bestimmen der Anfangszeit und der Zeitdauer des Ruherahmens aufweist, damit sie für die Zeitdauer dieses Ruherahmens in einen Datenempfangsmodus wechseln kann.

5. Mobilstation nach Anspruch 4, **dadurch gekennzeichnet, dass** sie auch Mittel (RDDM) aufweist, um zu detektieren, ob während der Zeitdauer des Ruherahmens Nutzdaten gesendet werden.

6. Mobilstation nach einem der Ansprüche 4 bis 5, **dadurch gekennzeichnet, dass** sie Mittel (DEM) aufweist, um auf einer zugewiesenen Frequenz Nutzdaten eines Anrufs zu senden, den sie während eines Slots eines Rahmens senden kann, der diesem dann zugeordnet wird, wobei einer der Mehrfachrahmen, die dann durch Zusammenfassung der zugeordneten Slots gebildet werden, mit den weiteren Mehrfachrahmen abgeglichen wird, die für weitere Anrufe auf der zugewiesenen Frequenz reserviert sein können.

7. Mobilstation nach einem der Ansprüche 4 bis 6, **dadurch gekennzeichnet, dass** sie Mittel (DGM) aufweist, um auf einer zugewiesenen Frequenz, welche sie wahrnehmen kann, die Nutzdaten bezüglich eines Anrufs zu erhalten, wobei die Daten ausgehend von einem der Mehrfachrahmen erhalten werden, der mit den weiteren Mehrfachrahmen abgeglichen wird, die für weitere Anrufe auf der zugewiesenen Frequenz reserviert sein können.

8. Mobilstation nach einem der Ansprüche 4 bis 7, **dadurch gekennzeichnet, dass** sie Mittel (ACCM) aufweist, um eine Zugriffskollision auf die Funkressourcen zu beheben, die zwischen dieser und einer weiteren Station in deren Reichweite detektiert wird, die nicht mit ihr synchronisiert ist.

9. Mobilstation nach Anspruch 8, wobei die in Reichweite zueinander befindlichen Mobilstationen des Systems durch Teilen von Synchronisationsdaten zeitlich miteinander synchronisiert werden, **dadurch gekennzeichnet, dass** sie dazu ausgelegt ist, Synchronisationsdaten zu empfangen, die von der weiteren Mobilstation gesendet werden, und sich mit der weiteren Mobilstation zu synchronisieren.

10. Mobilstation nach Anspruch 8, wobei die in Reichweite zueinander befindlichen Mobilstationen des Systems durch Teilen von Synchronisationsdaten zeitlich miteinander synchronisiert werden, **dadurch gekennzeichnet, dass** sie Mittel aufweist, um ihre Synchronisationsdaten zu senden, damit die weitere Mobilstation diese Synchronisationsdaten empfängt und sich mit ihr synchronisiert.

11. Verfahren zur Handhabung einer Zugriffskollision auf Funkressourcen, das dazu bestimmt ist, von jeder der Mobilstationen eines Systems für direkten Mobilfunk von der Art ausgeführt zu werden, bei der *Slots* (s_{j,i}) eines Rahmens, der eine zeitliche Verwendung einer Trägerfrequenz für Anrufe definiert, in Mehrfachrahmen (Mⱼ) zusammengefasst sind, die jeweils für das Senden der Nutzdaten eines der Anrufe reserviert sind, die von einer Mobilstation aus einer Mehrzahl von zeitlich miteinander synchronisierten Mobilstationen gesendet werden, **dadurch gekennzeichnet, dass** bei einem Ruherahmen, der aus dem zeitlichen Abgleich der freigelassenen *Slots* der Mehrfachrahmen besteht, wobei der Ruherahmen periodisch auf der Trägerfrequenz gesendet wird, das Verfahren ferner einen Schritt (100) des Bestimmens der Anfangszeit und der Zeitdauer des Ruherahmens und einen Schritt (200) des Detektierens des Empfangs von Daten umfasst, die von einer weiteren Mobilstation gesendet werden, welcher mit der Anfangszeit anfängt und für eine Zeitdauer andauert, die gleich der Zeitdauer des Ruherahmens ist.

12. Verfahren zur Handhabung einer Zugriffskollision auf Funkressourcen nach Anspruch 11, wobei die in Reichweite zueinander befindlichen Mobilstationen des Systems durch Teilen von Synchronisationsdaten zeitlich miteinander synchronisiert werden, **dadurch gekennzeichnet, dass** in dem Falle, wo eine Zugriffskollision zwischen zwei Mobilstationen detektiert wurde, dem Schritt (200) des Detektierens des Empfangs von Daten ein Schritt (300) des Behebens der Zugriffskollision auf die Funkressourcen folgt, bei dem einerseits von einer ersten der beiden Mobilstationen Synchronisationsdaten empfangen werden, die von der zweiten der Mobilstationen gesendet werden, und bei dem andererseits die erste Mobilstation, welche die Synchronisationsdaten empfängt, ihre zeitliche Synchronisation gegenüber der zweiten Station vervollständigt, welche die Synchronisationsdaten sendet.

13. Verfahren zur Handhabung einer Zugriffskollision auf Funkressourcen nach Anspruch 12, **dadurch gekennzeichnet, dass** die Mobilstation, welche die Kollision detektiert hat, die erste Mobilstation ist.

14. Verfahren zur Handhabung einer Zugriffskollision auf Funkressourcen nach Anspruch 12, **dadurch gekennzeichnet, dass** die Mobilstation, welche die Kollision detektiert hat, die zweite Mobilstation ist.

15. Computerprogramm, das auf einem Informationsträger abgespeichert ist, **dadurch gekennzeichnet, dass** es Anweisungen umfasst, mit denen das Verfahren nach einem der Ansprüche 11 bis 14 durchgeführt werden kann, wenn es von einer Mobilstation eines Systems für direkten Mobilfunk geladen und ausgeführt wird.

## Claims

1. System for direct mobile telephony of the type wherein slots (s_{j,i}) of a frame that defines a temporal use of a carrier frequency for calls are assembled into multiframes (Mⱼ) which are each reserved for the transmission of the useful data of one of said calls, **characterised in that** the slots left free in said multiframes are temporally aligned.

2. System for direct mobile telephony according to Claim 1, **characterised in that** each mobile station of said system is suitable to detect a collision of access between the radio resources that it uses to transmit a call and the radio resources used by another mobile station transmitting another call, the two said mobile stations not being synchronised with one another.

3. System for direct mobile telephony according to Claim 2, **characterised in that** each mobile station is suitable to correct said collision of access.

4. Mobile station of a system for direct mobile telephony of the type wherein the slots (s_{j,i}) of a frame that defines a temporal use of a carrier frequency for calls are assembled into multiframes (Mⱼ) which are each reserved for the transmission of the useful data of one of said calls transmitted by one mobile station of a plurality of mobile stations synchronised with one another, **characterised in that** a frame of silence is constituted by the temporal alignment of the left-free slots of said multiframes, said frame of silence is transmitted periodically on said carrier frequency, and said mobile station includes means (ADM) for determining the start-time and the duration of said frame of silence, in order that it can switch over to a data-reception mode for the duration of this frame of silence.

5. Mobile station according to Claim 4, **characterised in that** it also includes means (RDDM) for detecting whether useful data are transmitted during the duration of said frame of silence.

6. Mobile station according to one of Claims 4 to 5, **characterised in that** it includes means (DEM) for transmitting, on an allocated frequency, useful data of a call that it is capable of transmitting in the course of a frame slot that would then be dedicated to it, one of said multiframes then formed by the assembling of said dedicated slots being aligned with said other multiframes capable of being reserved for other calls on said allocated frequency.

7. Mobile station according to one of Claims 4 to 6, **characterised in that** it includes means (DGM) for obtaining the useful data relating to a call on an allocated frequency that it is capable of monitoring, said data being obtained from one of said multiframes which is aligned with said other multiframes capable of being reserved for other calls on said allocated frequency.

8. Mobile station according to one of Claims 4 to 7, **characterised in that** it includes means (ACCM) for correcting a collision of access to the radio resources which has been detected between it and another station within its range which is not synchronised with it.

9. Mobile station according to Claim 8, the mobile stations within range of one another of said system being synchronised with one another by sharing of synchronisation data, **characterised in that** it is suitable to receive synchronisation data transmitted by said other mobile station, and to synchronise itself with said other mobile station.

10. Mobile station according to Claim 8, the mobile stations within range of one another of said system being synchronised with one another by sharing of synchronisation data, **characterised in that** it includes means for transmitting its synchronisation data, in order that said other mobile station obtains these synchronisation data and synchronises itself with it.

11. Process for managing collision of access to radio resources, intended to be executed by each mobile station of a system for direct mobile telephony of the type wherein the slots (s_{j,i}) of a frame that defines a temporal use of a carrier frequency for calls are assembled into multiframes (Mⱼ) which are each reserved for the transmission of the useful data of one of said calls transmitted by one mobile station of a plurality of mobile stations synchronised with one another, **characterised in that** a frame of silence is constituted by the temporal alignment of the left-free slots of said multiframes, said frame of silence is transmitted periodically on said carrier frequency, and said process includes, in addition, a step (100) of determination of the start-time and of the duration of said frame of silence, and a step (200) of detection of reception of data transmitted by another mobile station, which starts at said start-time and for a duration equal to said duration of said frame of silence.

12. Process for managing collision of access to radio resources, according to Claim 11, the mobile stations within range of one another of said system being synchronised with one another by sharing of synchronisation data, **characterised in that** in the case where a collision of access has been detected between two mobile stations said step (200) of detection of reception of data is followed by a step (300) of correction of collision of access to the radio resources, in the course of which, on the one hand, the synchronisation data transmitted by the second of the two said mobile stations are received by a first of the two said mobile stations, and in the course of which, on the other hand, said first mobile station receiving said synchronisation data completes its synchronisation as regards said second station transmitting said synchronisation data.

13. Process for managing collision of access to radio resources, according to Claim 12, **characterised in that** the mobile station that has detected said collision is said first mobile station.

14. Process for managing collision of access to radio resources, according to Claim 12, **characterised in that** the mobile station that has detected said collision is said second mobile station.

15. Computer program stored on a data carrier, **characterised in that** it comprises instructions enabling the process according to one of Claims 11 to 14 to be implemented when it is loaded and executed by a mobile station of a system for direct mobile telephony.
